# EUROPÄISCHE PATENTSCHRIFT

(11) **EP 3 519 857 B1**
(45) Veröffentlichungstag und Bekanntmachung des Hinweises auf die Patenterteilung: **27.03.2024**
(21) Anmeldenummer: 17777248.0
(22) Anmeldetag: 28.09.2017
(51) Int. Cl.: G01S 17/42, G01S 17/93, G01S 7/487

(54) **ERFASSUNGSVORRICHTUNG FÜR EIN KRAFTFAHRZEUG, FAHRERASSISTENZSYSTEM, KRAFTFAHRZEUG SOWIE VERFAHREN**
DETECTION DEVICE FOR A MOTOR VEHICLE, DRIVER ASSISTANCE SYSTEM, MOTOR VEHICLE, AND METHOD
DISPOSITIF DE DÉTECTION POUR UN VÉHICULE AUTOMOBILE, SYSTÈME D'AIDE À LA CONDUITE, VÉHICULE AUTOMOBILE ET PROCÉDÉ ASSOCIÉ

(30) Priorität: 29.09.2016 DE 102016118468
(43) Veröffentlichungstag der Anmeldung: 07.08.2019
(73) Patentinhaber: Valeo Schalter und Sensoren GmbH, 74321 Bietigheim-Bissingen (DE)
(72) Erfinder: SIMON, Jan, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Withopf, Kristina
(86) Internationale Anmeldenummer: PCT/EP2017/074591
(87) Internationale Veröffentlichungsnummer: WO 2018/060309

(56) Entgegenhaltungen:
- DE-A1- 19 936 847
- DE-T5-112014 001 391
- US-A1- 2016 041 266

## Beschreibung

Die Erfindung betrifft eine Erfassungsvorrichtung für ein Kraftfahrzeug zum Erfassen eines Abstands eines Objektes in einem Umgebungsbereich des Kraftfahrzeugs zu dem Kraftfahrzeug, mit einer Sendeeinrichtung, welche dazu ausgelegt ist, einen Lichtstrahl auszusenden und den Umgebungsbereich durch Orientieren des Lichtstrahls entlang vorbestimmter Sendewinkel abzutasten, und mit einer Empfangseinrichtung aufweisend zumindest zwei Empfangselemente, welche dazu ausgelegt sind, einen an dem Objekt reflektierten Teil des Lichtstrahls zu empfangen, den Abstand anhand einer Zeitdauer zwischen dem Aussenden des Lichtstrahls und dem Empfangen des reflektierten Teils des Lichtstrahls zu erfassen und einen Empfangswinkel, unter welchem der reflektierte Teil des Lichtstrahls aus dem Umgebungsbereich auf die Empfangseinrichtung auftrifft, zu erfassen. Die Erfindung betrifft außerdem ein Fahrerassistenzsystem, ein Kraftfahrzeug sowie ein Verfahren zum Erfassen eines Abstands eines Objekts in einem Umgebungsbereich eines Kraftfahrzeugs zu dem Kraftfahrzeug.

Im vorliegenden Fall richtet sich das Interesse auf eine optische Erfassungsvorrichtung für ein Kraftfahrzeug, insbesondere einen Laserscanner. Mittels der Erfassungsvorrichtung kann ein Umgebungsbereich des Kraftfahrzeugs überwacht werden. Dabei können Objekte in dem Umgebungsbereich erfasst werden und Informationen über die erfassten Objekte, beispielsweise eine relative Lage der Objekte zu dem Kraftfahrzeug, einem Fahrerassistenzsystem des Kraftfahrzeugs bereitgestellt werden. Das Fahrerassistenzsystem kann basierend auf diesen Informationen beispielsweise Maßnahmen zur Vermeidung einer Kollision des Kraftfahrzeugs mit dem Objekt einleiten, beispielsweise das Kraftfahrzeug vor der Kollision automatisch abbremsen.

Bei Laserscannern gemäß dem Stand der Technik wird üblicherweise ein Lichtstrahl, beispielsweise ein Laserstrahl, in den Umgebungsbereich ausgesendet und der Umgebungsbereich durch Verändern eines Sendewinkels beziehungsweise einer Senderichtung, entlang welcher der Lichtstrahl orientiert wird, abgetastet. Sobald der Lichtstrahl auf ein Objekt in dem Umgebungsbereich trifft, wird der Lichtstrahl idealerweise an dem Objekt zurück zu dem Laserscanner reflektiert, welcher anhand einer Laufzeit des Lichtstrahls beziehungsweise einer Zeitdauer zwischen dem Aussenden des Lichtstrahls und dem Empfangen des reflektierten Teils des Lichtstrahls einen Abstand des Objekts bezüglich des Kraftfahrzeugs bestimmen kann. Unter Kenntnis des Sendewinkels beim Aussenden des Lichtstrahls kann außerdem eine Orientierung beziehungsweise eine Richtung des Objektes zu dem Kraftfahrzeug bestimmt werden. Aus der Orientierung sowie dem Abstand kann dann die relative Lage des Objekts zu dem Kraftfahrzeug bestimmt werden.

Probleme ergeben sich jedoch, wenn der Lichtstrahl an dem Objekt gestreut wird, durch die Streuung auf ein anderes Objekt in dem Umgebungsbereich abgelenkt wird, der an diesem anderen Objekt reflektierte Teil des Lichtstrahls zu dem Laserscanner zurückgelangt und von dem Laserscanner erfasst wird. Aus der Ablenkung des Lichtstrahls auf das andere Objekt und der Reflexion des Lichtstrahls an dem anderen Objekt resultiert ein indirekter Signalweg des Lichtstrahls, welcher üblicherweise nicht von dem Laserscanner erkannt werden kann. Durch den indirekten Signalweg verlängert sich die Laufzeit des Lichtstrahls, sodass der anhand von dieser längeren Laufzeit bestimmte Abstand des Objektes fehlerhaft ist und nicht den tatsächlichen Abstand des Objektes zu dem Kraftfahrzeug widerspiegelt. Durch diese Abstandsfehlmessung kann dann das Fahrerassistenzsystem nicht zuverlässig betrieben werden. Abstandsmesseinrichtungen sind aus US2016041266 A1, DE112014001391T T5 und DE19936847 A1 bekannt.

Es ist Aufgabe der vorliegenden Erfindung, eine Lösung bereitzustellen, wie Abstände von Objekten in einem Umgebungsbereich eines Kraftfahrzeugs besonders genau bestimmt werden können, und somit der Umgebungsbereich besonders zuverlässig überwacht werden kann.

Diese Aufgabe wird erfindungsgemäß durch eine Erfassungsvorrichtung, ein Fahrerassistenzsystem, ein Kraftfahrzeug sowie ein Verfahren gemäß den jeweiligen unabhängigen Ansprüchen gelöst. Vorteilhafte Ausführungsformen der Erfindung sind Gegenstand der abhängigen Ansprüche, der Beschreibung sowie der Figuren.

Bei einer Ausführungsform einer erfindungsgemäßen Erfassungsvorrichtung für ein Kraftfahrzeug zum Erfassen eines Abstands eines Objektes in einem Umgebungsbereich des Kraftfahrzeugs zu dem Kraftfahrzeug weist diese eine Sendeeinrichtung auf, welche dazu ausgelegt ist, einen Lichtstrahl auszusenden und den Umgebungsbereich durch Orientieren des Lichtstrahls entlang vorbestimmter Sendewinkel abzutasten. Außerdem weist die Erfassungsvorrichtung gemäß dieser Ausführungsform eine Empfangseinrichtung mit zumindest zwei Empfangselementen auf, welche dazu ausgelegt sind, einen an dem Objekt reflektierten Teil des Lichtstrahls zu empfangen, den Abstand anhand einer Zeitdauer zwischen dem Aussenden des Lichtstrahls und dem Empfangen des reflektierten Teils des Lichtstrahls zu erfassen und einen Empfangswinkel, unter welchem der reflektierte Teil des Lichtstrahls aus dem Umgebungsbereich auf die Empfangseinrichtung auftrifft, zu erfassen. Dabei ist die Empfangseinrichtung dazu ausgelegt, eine Abweichung zwischen dem Sendewinkel des Lichtstrahls und dem mit dem Sendewinkel korrespondierenden Empfangswinkel des reflektierten Teils des Lichtstrahls zu erfassen.

Dazu weist eine erfindungsgemäße Erfassungsvorrichtung für ein Kraftfahrzeug zum Erfassen eines Abstands eines Objektes in einem Umgebungsbereich des Kraftfahrzeugs zu dem Kraftfahrzeug eine Sendeeinrichtung auf, welche dazu ausgelegt ist, einen Lichtstrahl auszusenden und den Umgebungsbereich durch Orientieren des Lichtstrahls entlang vorbestimmter Sendewinkel abzutasten. Außerdem umfasst die Erfassungsvorrichtung eine Empfangseinrichtung mit zumindest zwei Empfangselementen, welche dazu ausgelegt sind, einen an dem Objekt reflektierten Teil des Lichtstrahls zu empfangen, den Abstand anhand einer Zeitdauer zwischen dem Aussenden des Lichtstrahls und dem Empfangen des reflektierten Teils des Lichtstrahls zu erfassen und einen Empfangswinkel, unter welchem der reflektierte Teil des Lichtstrahls aus dem Umgebungsbereich auf die Empfangseinrichtung auftrifft, zu erfassen. Darüber hinaus ist die Empfangseinrichtung dazu ausgelegt, eine Abweichung zwischen dem Sendewinkel des Lichtstrahls und dem mit dem Sendewinkel korrespondierenden Empfangswinkel des reflektierten Teils des Lichtstrahls zu erfassen.

Die Erfassungsvorrichtung, welche insbesondere als ein Lidar-System (Lidar-"Light Detection and Ranging") beziehungsweise als ein Laserscanner ausgebildet ist, kann an einem Kraftfahrzeug angeordnet werden, um den Umgebungsbereich des Kraftfahrzeugs zu überwachen. Dabei kann die Erfassungsvorrichtung den Umgebungsbereich mittels eines Lichtstrahls, insbesondere eines Laserstrahls, abtasten beziehungsweise abscannen und somit Objekte in dem Umgebungsbereich erkennen. Dazu weist die Sendeeinrichtung der Erfassungsvorrichtung insbesondere ein Sendeelement zum Aussenden des Lichtstrahls auf. Das eine Sendeelement kann dabei zumindest eine Lichtquelle in Form von einer Laserdiode oder eine Leuchtdiode beziehungsweise LED aufweisen.

Zum Abtasten des Umgebungsbereiches wird der Lichtstrahl nacheinander beziehungsweise sequenziell entlang unterschiedlicher Senderichtungen ausgesendet. Mit anderen Worten bedeutet dies, dass der Sendewinkel, unter welchem der Lichtstrahl in den Umgebungsbereich ausgesendet wird, schrittweise verändert wird. Während einer ersten Messung beziehungsweise zu einem ersten Messzeitpunkt wird der Lichtstrahl entlang einer ersten Senderichtung orientiert, während einer darauffolgenden zweiten Messung beziehungsweise zu einem zweiten nachfolgenden Messzeitpunkt wird der Lichtstrahl entlang einer zweiten Senderichtung orientiert, usw. Der Sendewinkel kann dabei als ein Winkel angegeben werden, um welchen die Senderichtung, horizontal und/oder vertikal, von einer vorbestimmten Richtung, beispielsweise einer Fahrzeuglängsrichtung, abweicht.

Zum Einstellen des Sendewinkels des Lichtstrahls weist die Sendeeinrichtung vorzugsweise ein Ablenkelement auf, welches dazu ausgelegt ist, zum Bereitstellen der unterschiedlichen Sendewinkel den von dem Sendeelement ausgesendeten Lichtstrahl entlang einer horizontalen und/oder vertikalen Richtung abzulenken. Das Ablenkelement kann beispielsweise ein schwenkbarer oder rotierbarer Spiegel sein, dessen Orientierung schrittweise geändert werden kann, sodass der auf den Spiegel ausgesendete Lichtstrahl entlang einer mit der Orientierung des Spiegels korrespondierenden Senderichtung in den Umgebungsbereich abgelenkt wird. Durch das horizontale und vertikale Ablenken des Lichtstrahls mittels des Ablenkelementes kann der Umgebungsbereich zeilenweise oder spaltenweise abgetastet werden. Dabei ist die Sendeeinrichtung eine winkelauflösende Sendeeinrichtung. Dies bedeutet, dass der Sendewinkel, unter welchem der Lichtstrahl während einer bestimmten Messung beziehungsweise zu einem bestimmten Messzeitpunkt ausgesendet wird, bekannt ist. Der Sendewinkel weist dabei insbesondere eine erste, horizontale Komponente und eine zweite, vertikale Komponente auf. Zum Erfassen des Sendewinkels kann die Sendeeinrichtung beispielsweise die aktuelle Orientierung des Ablenkelementes, insbesondere eine horizontale Auslenkung und eine vertikale Auslenkung des Ablenkelementes, bestimmen.

Wenn sich ein Objekt in dem Umgebungsbereich des Kraftfahrzeugs in einer Richtung zu dem Kraftfahrzeug befindet, welche der aktuellen Senderichtung des Lichtstrahls entspricht, so wird der entlang dieser Senderichtung ausgesendete Lichtstrahl an dem Objekt reflektiert. Wenn ein Teil des Lichtstrahls zu der Empfangseinrichtung zurückreflektiert wird, kann die Empfangseinrichtung den Lichtstrahl erfassen. Anhand einer Laufzeit des ausgesendeten Lichtstrahls und des reflektierten Teils des Lichtstrahls, also anhand einer Zeitdauer zwischen dem Aussenden des Lichtstrahls und dem Empfangen des reflektierten Teils des Lichtstrahls, kann der Abstand des Objekts zu dem Kraftfahrzeug erfasst werden.

Dabei ist nicht nur die Sendeeinrichtung winkelauflösend ausgebildet, sondern zusätzlich die Empfangseinrichtung. Dies bedeutet, dass die Empfangseinrichtung dazu ausgelegt ist, den Empfangswinkel, unter welchem der reflektierte Teil des Lichtstrahls aus dem Umgebungsbereich auf die Empfangseinrichtung auftrifft, zu erfassen. Der Empfangswinkel ist dabei insbesondere ein Winkel zwischen einer Empfangsrichtung, aus welcher der reflektierte Teil des Lichtstrahls auf die Empfangseinrichtung auftrifft, und der vorbestimmten Richtung. Dabei können von der Empfangseinrichtung eine vertikale und/oder eine horizontale Komponente des Empfangswinkels bestimmt werden. Somit ist für jede Messung sowohl der Sendewinkel, unter welchem der Lichtstrahl in den Umgebungsbereich ausgesendet wurde, als auch der Empfangswinkel, unter welchem der reflektierte Teil dieses Lichtstrahls aus dem Umgebungsbereich empfangen wurde, bekannt. Zu jedem Sendewinkel kann somit der mit diesem Sendewinkel korrespondierende Empfangswinkel bestimmt werden.

Die Empfangseinrichtung ist dabei mittels der zumindest zwei Empfangselemente winkelauflösend ausgebildet. Die Empfangselemente können beispielsweise als lichtempfindliche Sensorelemente ausgebildet sein, wobei jedem Empfangselement jeweils ein Empfangswinkel zugeordnet ist. Die zumindest zwei Empfangselemente können zur Erfassung der horizontalen Komponente des Empfangswinkels in zumindest einer Zeile und/oder zur Erfassung der vertikalen Komponente des Empfangswinkels in zumindest einer Spalte angeordnet sein. Die Empfangseinrichtung ist dazu ausgelegt, den Empfangswinkel anhand des den reflektierten Lichtstrahl erfassenden Empfangselementes zu bestimmen. Dies bedeutet, dass der reflektierte Lichtstrahl im Wesentlichen auf eines der Empfangselemente der Empfangseinrichtung auftrifft. Anhand dieses aktuell erfassenden Empfangselementes kann dann der zugehörige Empfangswinkel bestimmt werden.

Der Ausgestaltung der Empfangseinrichtung als winkelauflösende Empfangseinrichtung liegt die Erkenntnis zugrunde, dass der Abstand des Objektes nur dann korrekt erfasst werden kann, wenn der ausgesendete Lichtstrahl direkt wieder zurück zur Empfangseinrichtung reflektiert wird. Der Abstand kann also nur anhand eines Lichtstrahls mit einem direkten Signalweg korrekt erfasst werden. Mittels der winkelauflösenden Empfangseinrichtung können also in vorteilhafter Weise all diejenigen reflektierten Teile von Lichtstrahlen identifiziert werden sollen, welche nicht auf direktem Signalweg zurück zur Empfangseinrichtung gelangt sind. Dies kann beispielsweise dann vorkommen, wenn der Lichtstrahl nicht direkt an dem Objekt reflektiert wird, sondern gestreut und auf ein anderes Objekt abgelenkt wird und an diesem anderen Objekt reflektiert wird. Durch diesen indirekten Signalweg erhöht sich die Zeitdauer zwischen dem Aussenden des Lichtstrahls und dem Empfangen des reflektierten Teils des Lichtstrahls, was zu einem Fehler in der Abstandsmessung führt. Mittels der Erfassungsvorrichtung mit der winkelauflösenden Sendeeinrichtung und der winkelauflösenden Empfangseinrichtung können diese indirekten Signalwege erkannt und berücksichtigt werden, und somit Abstandsfehlmessungen vermieden werden. Die Erfassungsvorrichtung ist somit besonders zuverlässig gestaltet.

Außerdem ist es vorgesehen, dass die Empfangseinrichtung dazu ausgelegt ist, eine Abweichung zwischen dem Sendewinkel des Lichtstrahls und dem mit dem Sendewinkel korrespondierenden Empfangswinkel des reflektierten Teils des Lichtstrahls zu erfassen. Bei jeder Messung, welche das Aussenden des Lichtstrahls und das Empfangen des reflektierten Teils des Lichtstrahls umfasst, werden der Sendewinkel des Lichtstrahls sowie der mit dem Sendewinkel korrespondierende Empfangswinkel erfasst. Der Sendewinkel wird dabei seitens der Sendeeinrichtung, beispielsweise über die aktuelle Orientierung beziehungsweise Ausrichtung der Ablenkeinrichtung, erfasst. Der Empfangswinkel wird seitens der Empfangseinrichtung erfasst. Der Empfangswinkel wird mit dem korrespondierenden Sendewinkel abgeglichen, indem die Abweichung beispielsweise als ein Winkel zwischen der Senderichtung und der Empfangsrichtung bestimmt wird. Anhand eines Werts der Abweichung kann das detektierte Signal des Lidar-Systems beziehungsweise eine Messung des Laserscanners auf besonders einfache Weise plausibilisiert werden.

Die Empfangseinrichtung ist insbesondere dazu ausgelegt, eine Messung aufweisend das Aussenden des Lichtstrahls entlang eines bestimmten Sendewinkels und das Empfangen des reflektierten Teils des unter diesem Sendewinkel ausgesendeten Lichtstrahls als ungültig zu bewerten, falls die Abweichung einen vorbestimmten Schwellwert für die Abweichung überschreitet. Falls also die Senderichtung und die Empfangseinrichtung nicht übereinstimmen und der Winkel zwischen der Senderichtung und der Empfangseinrichtung außerhalb eines vorbestimmten Winkelbereichs liegt, wird die Messung als ungültig bewertet und der in dieser Messung anhand der Laufzeit bestimmte Abstand verworfen. Somit kann verhindert werden, dass dem Fahrerassistenzsystem falsche Abstandsinformationen bereitgestellt werden. Beispielsweise kann im Fall einer ungültigen Messung ein Warnsignal an einen Fahrer des Kraftfahrzeugs ausgegeben werden, durch welches der Fahrer darauf hingewiesen wird, dass sich zwar ein Objekt in dem Umgebungsbereich befindet, dessen Abstand aber nicht genau erfasst werden kann.

Auch kann vorgesehen sein, dass die Empfangseinrichtung dazu ausgelegt ist, in Abhängigkeit von der Abweichung eine Wahrscheinlichkeit für eine Plausibilität der Messung zu bestimmen, die Sendeeinrichtung zum erneuten Aussenden des Laserstrahls unter dem mit dieser Messung korrespondierenden Sendewinkel anzusteuern, falls die Wahrscheinlichkeit einen vorbestimmten Grenzwert unterschreitet, und die Abweichung zwischen dem Sendewinkel und dem Empfangswinkel für die erneute Messung zu bestimmen. Es wird also Plausibilität des erfassten Abstands in Abhängigkeit von dem Wert beziehungsweise einer Größe der Abweichung bewertet. Je größer die Abweichung ist, desto unwahrscheinlicher ist es, dass der reflektierte Lichtstrahl von der direkten Reflexion an dem Objekt stammt. Wenn die Wahrscheinlichkeit beispielsweise den vorbestimmten Grenzwert unterschreitet, so kann die Messung unter diesem Sendewinkel wiederholt werden und der Sendewinkel und der Empfangswinkel erneut abgeglichen werden. Erst wenn die Abweichung zwischen dem Sendewinkel und dem Empfangswinkel nach der wiederholten Messung den vorbestimmten Schwellwert erneut überschreitet, wird die Messung als ungültig bewertet. Mittels der Erfassungsvorrichtung können somit zuverlässig Objekte in dem Umgebungsbereich erfasst werden sowie deren tatsächliche Lagen relativ zum Kraftfahrzeug bestimmt werden.

Dabei kann vorgesehen sein, dass ein entlang einer horizontalen Richtung orientierter Öffnungswinkel eines Erfassungsbereiches der Erfassungsvorrichtung größer ist als ein entlang einer vertikalen Richtung orientierter Öffnungswinkel des Erfassungsbereiches. Der horizontale Öffnungswinkel beschreibt einen Winkelbereich des Erfassungsbereiches in einer beispielsweise durch die Fahrzeuglängsrichtung und eine Fahrzeugquerrichtung aufgespannten horizontalen Ebene. Der vertikale Öffnungswinkel beschreibt einen Winkelbereich in einer senkrecht auf der horizontalen Ebene stehenden vertikalen Ebene, welche beispielsweise von der Fahrzeuglängsrichtung und einer Fahrzeughorchrichtung aufgespannt wird. Der Erfassungsbereich beschreibt dabei insbesondere den Bereich des Umgebungsbereiches, in welchen der Lichtstrahl von der Sendeeinrichtung ausgesendet wird und aus welchem der reflektierte Teil des Lichtstrahls von der Empfangseinrichtung empfangen wird. Durch den im Vergleich zum vertikalen Öffnungswinkel größeren horizontalen Öffnungswinkel ist der Erfassungsbereich in der horizontalen Richtung aufgeweitet in der vertikalen Richtung verschmälert. Durch das Verschmälern des Erfassungsbereiches in vertikaler Richtung können in vorteilhafter Weise Bodenreflexionen, also Reflexionen des ausgesendeten Lichtstrahls an einer Fahrbahn für das Kraftfahrzeug, verhindert oder zumindest verringert werden.

Vorzugsweise weist die Empfangseinrichtung eine Matrixanordnung von Empfangselementen auf, in welcher die Empfangselemente zum Erfassen einer horizontalen und einer vertikalen Komponente des Empfangswinkels zeilenweise und spaltenweise angeordnet sind. Empfängerseitig wird also eine Empfangsmatrix aufweisend eine rasterartige Anordnung von Empfangselementen bereitgestellt. Jedem Empfangselement kann dabei jeweils ein Empfangswinkel zugeordnet sein. Die Matrixanordnung ist dazu ausgelegt, den Empfangswinkel anhand des den reflektierten Lichtstrahl erfassenden Empfangselementes in der Matrixanordnung zu bestimmen. Dies bedeutet, dass der reflektierte Lichtstrahl im Wesentlichen auf eines der Empfangselemente der Matrixanordnung auftrifft. Anhand dieses aktuell erfassenden Empfangselementes kann dann der zugehörige Empfangswinkel bestimmt werden. Dabei kann durch das Empfangselement anhand einer Reihe, in welcher das Empfangselement angeordnet ist, die vertikale Komponente des Empfangswinkels bestimmt werden und anhand einer Spalte, in welcher das Empfangselement angeordnet ist, die horizontale Komponente des Empfangswinkels bestimmt werden. Insbesondere weist die Matrixanordnung der Empfangseinrichtung 1500 Spalten und 200 Reihen mit Empfangselementen auf. Dadurch wird ein im Vergleich zum vertikalen Öffnungswinkel größerer horizontaler Öffnungswinkel des Erfassungsbereiches der Erfassungsvorrichtung bereitgestellt.

Vorzugsweise weist die Sendeeinrichtung und/oder die Empfangseinrichtung entlang der horizontalen Richtung und/oder der vertikalen Richtung ein Winkelauflösungsvermögen von 0,1°auf. Bei einer Sendeeinrichtung mit einem Winkelauflösungsvermögen von 0,1° bedeutet dies, dass die Sendeeinrichtung in jeder Messung dazu ausgelegt ist, den Sendewinkel in horizontaler Richtung und/oder vertikaler Richtung um 0,1°im Vergleich zur vorhergehenden Messung zu verändern. Bei einer Empfangseinrichtung mit einem Winkelauflösungsvermögen von 0,1°bedeutet dies, dass zwei benachbarte Empfangselemente der Empfangsmatrix zwei reflektierte Teile von Lichtstrahlen unterscheiden können, deren Empfangsrichtungen einen Winkel von 0,1°zueinander aufweisen. Bei einem Auflösungsvermögen von 0,1°in horizontaler und vertikaler Richtung und bei 1500 Empfangselementen pro Zeile und 200 Empfangselementen pro Spalte weist der Erfassungsbereich somit einen horizontalen Öffnungswinkel von 150° und einen vertikalen Öffnungswinkel von 20°auf. In diesem Erfassungsbereich kann der Empfangswinkel mit einer besonders hohen Genauigkeit bestimmt werden.

Die Erfindung betrifft außerdem ein Fahrerassistenzsystem für ein Kraftfahrzeug zum Überwachen eines Umgebungsbereiches des Kraftfahrzeugs mit zumindest einer Erfassungseinrichtung. Durch die Erfassungseinrichtung, welche Informationen über eine Lage des Objektes bezüglich des Kraftfahrzeugs liefern kann, kann beispielsweise ein zumindest semiautonomes Fahren des Kraftfahrzeugs ermöglicht werden. Beispielsweise kann das Kraftfahrzeug automatisch abgebremst werden, wenn von der Erfassungseinrichtung erfasst wurde, dass der Abstand des Objekts zu dem Kraftfahrzeug einen vorbestimmten Abstandsschwellwert unterschreitet.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die Erfindung betrifft ebenfalls ein Verfahren zum Erfassen eines Abstands eines Objekts in einem Umgebungsbereich eines Kraftfahrzeugs zu dem Kraftfahrzeug. Gemäß einer Ausführungsform des Verfahrens wird mittels einer Sendeeinrichtung ein Lichtstrahl ausgesendet und der Umgebungsbereich durch Orientieren des Lichtstrahls entlang vorbestimmter Sendewinkel abgetastet. Von zumindest zwei Empfangselementen einer Empfangseinrichtung kann ein an dem Objekt reflektierter Teil des Lichtstrahls empfangen werden, der Abstand anhand einer Zeitdauer zwischen dem Aussenden des Lichtstrahls und dem Empfangen des reflektierten Teils des Lichtstrahls erfasst werden und ein Empfangswinkel, unter welchem der reflektierte Teil des Lichtstrahls aus dem Umgebungsbereich auf die Empfangseinrichtung auftrifft, erfasst werden. Dabei wird von der Empfangseinrichtung eine Abweichung zwischen dem Sendewinkel des Lichtstrahls und dem mit dem Sendewinkel korrespondierenden Empfangswinkel des reflektierten Teils des Lichtstrahls erfasst.

Erfindungsgemäß wird bei dem Verfahren von einer Sendeeinrichtung ein Lichtstrahl ausgesendet und der Umgebungsbereich durch Orientieren des Lichtstrahls entlang vorbestimmter Sendewinkel abgetastet. Von zumindest zwei Empfangselementen einer Empfangseinrichtung wird ein an dem Objekt reflektierter Teil des Lichtstrahls empfangen, der Abstand anhand einer Zeitdauer zwischen dem Aussenden des Lichtstrahls und dem Empfangen des reflektierten Teils des Lichtstrahls erfasst und ein Empfangswinkel, unter welchem der reflektierte Teil des Lichtstrahls aus dem Umgebungsbereich auf die Empfangseinrichtung auftrifft, erfasst. Darüber hinaus wird von der Empfangseinrichtung eine Abweichung zwischen dem Sendewinkel des Lichtstrahls und dem mit dem Sendewinkel korrespondierenden Empfangswinkel des reflektierten Teils des Lichtstrahls erfasst.

Mit Angaben "vor", "hinter", "vertikal", "horizontal", etc. sind bei bestimmungsgemäßem Gebrauch und bei bestimmungsgemäßem Anordnen der Erfassungsvorrichtung am Kraftfahrzeug und bei einem dann vor dem Kraftfahrzeug stehenden und entlang einer Fahrzeuglängsrichtung (L) des Kraftfahrzeugs blickenden Beobachter gegebene Position und Orientierungen angegeben.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs; und
- Fig. 2: eine schematische Darstellung einer Ausführungsform einer erfindungsgemäßen Erfassungsvorrichtung beim Erfassen eines Abstands eines Objektes.

In den Figuren sind gleiche sowie funktionsgleiche Elemente mit den gleichen Bezugszeichen versehen.

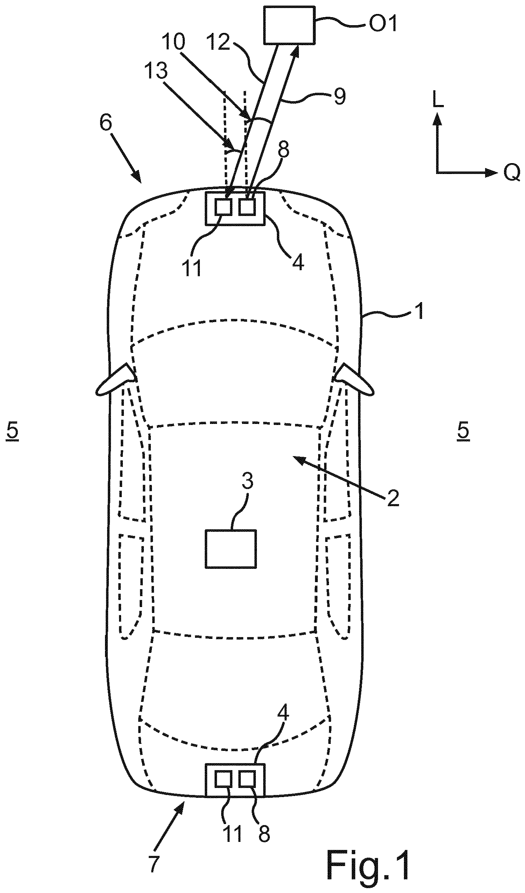

Fig. 1 zeigt ein Kraftfahrzeug 1, welches im vorliegenden Fall als ein Personenkraftwagen ausgebildet ist. Das Kraftfahrzeug 1 umfasst ein Fahrerassistenzsystem 2, welches dazu ausgebildet ist, einen Fahrer des Kraftfahrzeugs 1 beim Führen des Kraftfahrzeugs 1 zu unterstützen. Das Fahrerassistenzsystem 2 kann beispielsweise dazu ausgebildet sein, ein zumindest semiautonomes Fahren für das Kraftfahrzeug 1 bereitzustellen. Dazu kann eine Steuereinrichtung 3 des Fahrerassistenzsystems 2 beispielsweise in einen Antriebsstrang sowie ein Bremssystem des Kraftfahrzeugs 1 eingreifen. Das Fahrerassistenzsystem 2 weist außerdem zumindest eine Erfassungsvorrichtung 4 auf, welche dazu ausgelegt ist, einen Umgebungsbereich 5 des Kraftfahrzeugs 1 zu überwachen. Im vorliegenden Fall weist das Kraftfahrzeug 1 zwei Erfassungsvorrichtungen 4 auf, wobei eine erste Erfassungsvorrichtung 4 an einem Frontbereich 6 des Kraftfahrzeugs 1 angeordnet ist und dazu dient, den Umgebungsbereich 5 vor dem Kraftfahrzeug 1 zu überwachen, und eine zweite Überwachungsvorrichtung 4 an einem Heckbereich 7 des Kraftfahrzeugs 1 angeordnet ist und dazu dient, den Umgebungsbereich 5 hinter dem Kraftfahrzeug 1 zu überwachen. Die Erfassungsvorrichtung 4, welche insbesondere als ein Lidar-System beziehungsweise als ein Laserscanner ausgebildet ist, ist dazu ausgelegt, einen Abstand sowie eine Orientierung eines sich in dem Umgebungsbereich 5 befindlichen Objektes O1 relativ zum Kraftfahrzeug 1 zu bestimmen. Der Abstand sowie die Orientierung des Objektes O1, also eine relative Lage des Objektes O1 zu dem Kraftfahrzeug 1, können dem Fahrerassistenzsystem 2 bereitgestellt werden, welches das Kraftfahrzeug 1 beispielsweise automatisch abbremsen kann, wenn der Abstand einen vorbestimmten Abstandsschwellwert unterschreitet.

Zum Erfassen des Abstands und der Orientierung weist die Erfassungsvorrichtung 4 eine Sendeeinrichtung 8 auf, welche dazu ausgelegt ist, einen Lichtstrahl 9 nacheinander entlang unterschiedlicher Sendewinkel 10 zu orientieren und in den Umgebungsbereich 5 auszusenden. Eine Empfangseinrichtung 11 der Erfassungsvorrichtung 4 ist dazu ausgelegt, einen an dem Objekt O1 reflektierten Teil 12 des Lichtstrahls 9 wieder zu empfangen. Anhand einer Zeitdauer zwischen dem Aussenden des Lichtstrahls 9 und dem Empfangen des reflektierten Teils 12 des Lichtstrahls 9, also anhand einer Laufzeit des Lichtstrahls 9, kann die Empfangseinrichtung 11 den Abstand zwischen dem Objekt O1 und dem Kraftfahrzeug 1 erfassen. Außerdem ist die Empfangseinrichtung 11 dazu ausgelegt, einen Empfangswinkel 13, unter welchem der reflektierte Teil 12 aus dem Umgebungsbereich 5 auf die Empfangseinrichtung 11 auftrifft, zu erfassen. Gemäß Fig. 1 sind horizontale Komponenten des Sendewinkels 10 und des Empfangswinkels 13 in einer von einer Fahrzeuglängsrichtung L und einer Fahrzeugquerrichtung Q aufgespannten Horizontalebene gezeigt. Die horizontale Komponente des Sendewinkels 10 sowie eine hier nicht gezeigte vertikale Komponente des Sendewinkels 10 in einer von der Fahrzeuglängsrichtung L und einer Fahrzeughochrichtung aufgespannten Ebene können von der Sendeeinrichtung 8 erfasst werden. Die horizontale Komponente des Empfangswinkels 13 sowie eine hier nicht gezeigte vertikale Komponente des Empfangswinkels 13 können von der Empfangseinrichtung 11 erfasst werden. Dies bedeutet, dass die Sendeeinrichtung 8 und die Empfangseinrichtung 11 eine Winkelauflösung des Lichtstrahls 9 und des reflektierten Teils 12 des Lichtstrahls 9 erlauben.

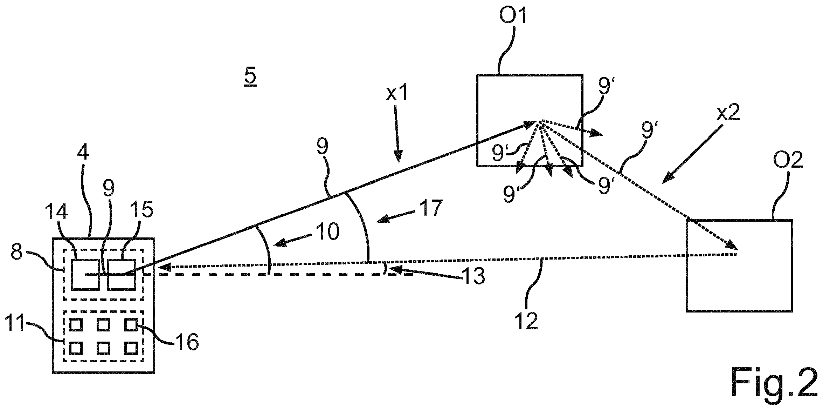

In Fig. 2 ist die Erfassungsvorrichtung 4 mit der Sendeeinrichtung 8 sowie der Empfangseinrichtung 11 bei der Erfassung des Abstands x1 des Objektes O1 gezeigt. Die Sendeeinrichtung 8 weist ein Sendeelement 14 auf, welches dazu ausgelegt ist, den Lichtstrahl 9 auf ein Ablenkelement 15 der Sendeeinrichtung 8 auszusenden. Das Sendeelement 14 kann beispielsweise zumindest eine Laserdiode aufweisen. Das Ablenkelement 15 kann den Lichtstrahl 9 ablenken und damit entlang unterschiedlicher Sendewinkel 10 orientieren. Das Ablenkelement 15 kann beispielsweise als ein beweglicher Spiegel ausgebildet sein, welcher in horizontaler Richtung entlang der Fahrzeugquerachse Q und in vertikaler Richtung entlang der Fahrzeughochachse ausgelenkt werden kann. Durch eine aktuelle Orientierung des Ablenkelementes 15 ist dabei der aktuelle Sendewinkel 10, unter welchem der Lichtstrahl 9 in den Umgebungsbereich 5 ausgesendet wird, bekannt.

Hier trifft der Lichtstrahl 9 auf das Objekt O1, welches einen ersten Abstand x1 zu der Erfassungsvorrichtung 4 aufweist. Dabei wird der Lichtstrahl 9 an dem Objekt O1 gestreut und die gestreuten Teile 9' des Lichtstrahls 9 in unterschiedliche Richtungen in den Umgebungsbereich 5 orientiert. Einer der gestreuten Teile 9' trifft hier auf ein weiteres Objekt O2 in dem Umgebungsbereich 5 des Kraftfahrzeugs 1, welches einen Abstand x2 zu dem Objekt O1 aufweist, und wird dort reflektiert. Der an dem Objekt O2 reflektierte Teil 12 des gestreuten Teils 9' des Lichtstrahls 9 trifft dabei auf die Empfangseinrichtung 11. Wenn die Empfangseinrichtung 11 nun den Abstand x1 des Objektes O1 anhand der Laufzeit des Lichtstrahls 9 erfassen würde, so würde fälschlicherweise unter anderem zusätzlich der Abstand x2 des weiteren Objektes O2 zu dem Objekt O1 berücksichtigt. Die anhand der Laufzeit des Lichtstrahls 9 bestimmte Abstandsinformation wäre somit fehlerhaft.

Um solche Abstandsfehlmessungen zu verhindern, erfasst die Empfangseinrichtung 11 zusätzlich den Empfangswinkel 13 des reflektierten Teils 12 des Lichtstrahls 9. Wird der Lichtstrahl 9 direkt an dem Objekt O1 reflektiert, so sind der Sendewinkel 10 und der Empfangswinkel 13 in etwa gleich. Hier weichen der Sendewinkel 10 und der Empfangswinkel 13 voneinander ab, was von der Empfangseinrichtung 11 erfasst werden kann. Anhand einer Abweichung 17 zwischen dem Sendewinkel 10 und dem Empfangswinkel 13 kann die Empfangseinrichtung 11 somit erfassen, dass der Lichtstrahl 9 nicht auf direktem Weg zurück zur Empfangseinrichtung 11 reflektiert wurde. Eine von der Erfassungsvorrichtung 4 durchgeführte Messung, welche das Aussenden des Lichtstrahls 9 und das Empfangen des reflektierten Teils 12 des Lichtstrahls 9 umfasst und bei welcher die Abweichung 17 einen vorbestimmten Schwellwert unterschreitet, kann also als ungültig bewertet werden beziehungsweise der in dieser Messung bestimmte Wert des Abstands verworfen werden. Auch kann anhand einer Größe der Abweichung die Messung plausibilisiert werden. Beispielsweise kann dazu anhand der Größe der Abweichung eine Wahrscheinlichkeit für die korrekte Bestimmung des Abstands bestimmt werden und gegebenenfalls die Messung wiederholt oder als ungültig bewertet werden.

Zur Erfassung des Empfangswinkels 13 weist die Empfangseinrichtung 11 eine Vielzahl von Empfangselementen 16 beziehungsweise lichtempfindlichen Detektorelementen auf, welche in einer Matrix angeordnet sind. Dabei kann die Matrixanordnung beispielsweise 200 Reihen mit jeweils 1500 Empfangselementen 16 aufweisen. Anhand des den reflektierten Teil 12 erfassenden Empfangselementes 16 kann somit der Empfangswinkel 13 bestimmt werden. Mittels der Matrixanordnung der Empfangselemente 16 kann in horizontaler Richtung ein Winkelbereich eines Erfassungsbereiches der Empfangseinrichtung 11 von 150°und in vertikaler R ichtung ein Winkelbereich des Erfassungsbereiches von 20°abgedeckt werden. Die E mpfangseinrichtung 11 kann beispielsweise in horizontaler Richtung und in vertikaler Richtung ein Winkelauflösungsvermögen von 0,1°aufweisen.

## Patentansprüche

1. Erfassungsvorrichtung (4) für ein Kraftfahrzeug (1) zum Erfassen eines Abstands
(x1) eines Objektes (O1) in einem Umgebungsbereich (5) des Kraftfahrzeugs (1) zu dem Kraftfahrzeug (1), mit einer Sendeeinrichtung (8), welche dazu ausgelegt ist, einen Lichtstrahl (9) auszusenden und den Umgebungsbereich (5) durch Orientieren des Lichtstrahls (9) entlang vorbestimmter Sendewinkel (10) abzutasten, und mit einer Empfangseinrichtung (11) aufweisend zumindest zwei Empfangselemente (16), welche dazu ausgelegt sind, einen an dem Objekt (O1) reflektierten Teil (12) des Lichtstrahls (9) zu empfangen, den Abstand (x1) anhand einer Zeitdauer zwischen dem Aussenden des Lichtstrahls (9) und dem Empfangen des reflektierten Teils (12) des Lichtstrahls (9) zu erfassen und einen Empfangswinkel (13), unter welchem der reflektierte Teil (12) des Lichtstrahls (9) aus dem Umgebungsbereich (5) auf die Empfangseinrichtung (11) auftrifft, zu erfassen,
**dadurch gekennzeichnet, dass** die Erfassungsvorrichtung so ausgelegt ist, dass der Sendewinkel (10) und der Empfangswinkel (13) etwa gleich sind, wenn der Lichtstrahl direkt an dem Objekt reflektiert wird, und
die Empfangseinrichtung (11) dazu ausgelegt ist, eine Abweichung (17) zwischen dem Sendewinkel (10) des Lichtstrahls (9) und dem mit dem Sendewinkel (10) korrespondierenden Empfangswinkel (13) des reflektierten Teils (12) des Lichtstrahls (9) zu erfassen, wobei der mit dem Sendewinkel (10) korrespondierende Empfangswinkel (13) der Empfangswinkel (13) ist, unter welchem der reflektierte Teil (12) des Lichtstrahls (9) aus dem Umgebungsbereich (5) empfangen wurde.

2. Erfassungsvorrichtung (4) nach Anspruch 1,
**dadurch gekennzeichnet, dass**
die Empfangseinrichtung (11) dazu ausgelegt ist, eine Messung aufweisend das Aussenden des Lichtstrahls (9) entlang eines bestimmten Sendewinkels (10) und das Empfangen des reflektierten Teils (12) des unter diesem Sendewinkel (10) ausgesendeten Lichtstrahls (9) als ungültig zu bewerten, falls die Abweichung (17) einen vorbestimmten Schwellwert für die Abweichung (17) überschreitet.

3. Erfassungsvorrichtung (4) nach einem der vorhergehenden Ansprüche,
**dadurch gekennzeichnet, dass**
die Sendeeinrichtung (8) ein Sendeelement (14) zum Aussenden des Lichtstrahls (9) und ein Ablenkelement (15), welches dazu ausgelegt ist, zum Bereitstellen der Sendewinkel (10) den von dem Sendeelement (14) ausgesendeten Lichtstrahl (9) entlang einer horizontalen und/oder vertikalen Richtung abzulenken, aufweist.

4. Erfassungsvorrichtung (4) nach einem der vorhergehenden Ansprüche,
**dadurch gekennzeichnet, dass**
ein entlang einer horizontalen Richtung orientierter Öffnungswinkel eines Erfassungsbereiches der Erfassungsvorrichtung (4) größer ist als ein entlang einer vertikalen Richtung orientierter Öffnungswinkel des Erfassungsbereiches.

5. Erfassungsvorrichtung (4) nach einem der vorhergehenden Ansprüche,
**dadurch gekennzeichnet, dass**
die Empfangseinrichtung (11) eine Matrixanordnung von Empfangselementen (16) aufweist, in welcher die Empfangselemente (16) zum Erfassen einer horizontalen und einer vertikalen Komponente des Empfangswinkels (13) zeilenweise und spaltenweise angeordnet sind.

6. Erfassungsvorrichtung (4) nach Anspruch 5,
**dadurch gekennzeichnet, dass**
die Matrixanordnung der Empfangseinrichtung (11) 1500 Spalten und 200 Reihen mit Empfangselementen (16) aufweist.

7. Erfassungsvorrichtung (4) nach einem der vorhergehenden Ansprüche,
**dadurch gekennzeichnet, dass**
die Sendeeinrichtung (8) und/oder die Empfangseinrichtung (11) entlang der horizontalen Richtung und/oder der vertikalen Richtung ein Winkelauflösungsvermögen von 0,1° aufweist.

8. Erfassungsvorrichtung (4) nach einem der vorhergehenden Ansprüche,
**dadurch gekennzeichnet, dass**
die Erfassungsvorrichtung (4) als ein Laserscanner ausgebildet ist.

9. Fahrerassistenzsystem (2) für ein Kraftfahrzeug (1) zum Überwachen eines Umgebungsbereiches (5) des Kraftfahrzeugs (1) mit zumindest einer Erfassungseinrichtung (4) nach einem der vorhergehenden Ansprüche.

10. Kraftfahrzeug (1) mit einem Fahrerassistenzsystem (2) nach Anspruch 9.

11. Verfahren zum Erfassen eines Abstands (x1) eines Objektes (O1) in einem Umgebungsbereich (5) eines Kraftfahrzeugs (1) zu dem Kraftfahrzeug (1), bei welchem von einer Sendeeinrichtung (8) ein Lichtstrahl (9) ausgesendet wird und der Umgebungsbereich (5) durch Orientieren des Lichtstrahls (9) entlang vorbestimmter Sendewinkel (10) abgetastet wird und von zumindest zwei Empfangselementen (16) einer Empfangseinrichtung (11) ein an dem Objekt (O1) reflektierter Teil (12) des Lichtstrahls (9) empfangen wird, der Abstand (x1) anhand einer Zeitdauer zwischen dem Aussenden des Lichtstrahls (9) und dem Empfangen des reflektierten Teils (12) des Lichtstrahls (9) erfasst wird und ein Empfangswinkel (13), unter welchem der reflektierte Teil (12) des Lichtstrahls (9) aus dem Umgebungsbereich (5) auf die Empfangseinrichtung (11) auftrifft, erfasst wird, **dadurch gekennzeichnet, dass** der Sendewinkel (10) und der Empfangswinkel (13) etwa gleich sind, wenn der Lichtstrahl direkt an dem Objekt reflektiert wird, und von der Empfangseinrichtung (11) eine Abweichung (17) zwischen dem Sendewinkel (10) des Lichtstrahls (9) und dem mit dem Sendewinkel (10) korrespondierenden Empfangswinkel (13) des reflektierten Teils (12) des Lichtstrahls (9) erfasst wird, wobei der mit dem Sendewinkel (10) korrespondierende Empfangswinkel (13) der Empfangswinkel (13) ist, unter welchem der reflektierte Teil (12) des Lichtstrahls (9) aus dem Umgebungsbereich (5) empfangen wurde.

## Claims

1. Detection device (4) for a motor vehicle (1) for detecting a distance (x1) of an object (01) in a surrounding area (5) of the motor vehicle (1) from the motor vehicle (1), having a transmitting unit (8), which is designed to transmit a light beam (9) and to scan the surrounding area (5) by orienting the light beam (9) along predetermined transmission angles (10), and having a receiving unit (11) comprising at least two receiving elements (16), which are designed to receive a portion (12) of the light beam (9) that is reflected from the object (01), to detect the distance (x1) on the basis of a period of time between transmission of the light beam (9) and reception of the reflected portion (12) of the light beam (9), and to detect a reception angle (13) at which the reflected portion (12) of the light beam (9) from the surrounding area (5) hits the receiving unit (11),
**characterized in that** the detection device is designed such that the transmission angle (10) and the reception angle (13) are approximately identical if the light beam is reflected directly from the object, and
the receiving unit (11) is designed to detect a variance (17) between the transmission angle (10) of the light beam (9) and the reception angle (13) of the reflected portion (12) of the light beam (9) that corresponds to the transmission angle (10), the reception angle (13) that corresponds to the transmission angle (10) being the reception angle (13) at which the reflected portion (12) of the light beam (9) from the surrounding area (5) has been received.

2. Detection device (4) according to Claim 1, **characterized in that**
the receiving unit (11) is designed to rate a measurement comprising transmission of the light beam (9) along a specific transmission angle (10) and reception of the reflected portion (12) of the light beam (9) transmitted at this transmission angle (10) as invalid if the variance (17) exceeds a predetermined threshold value for the variance (17).

3. Detection device (4) according to either one of the preceding claims,
**characterized in that**
the transmitting unit (8) has a transmitting element (14) for transmitting the light beam (9) and a deflection element (15), which is designed to deflect the light beam (9) transmitted by the transmitting element (14) along a horizontal and/or vertical direction to provide the transmission angles (10).

4. Detection device (4) according to any one of the preceding claims,
**characterized in that**
a beam angle of a detection area of the detection device (4) oriented along a horizontal direction is greater than a beam angle of the detection area oriented along a vertical direction.

5. Detection device (4) according to any one of the preceding claims,
**characterized in that**
the receiving unit (11) comprises a matrix arrangement of receiving elements (16), in which the receiving elements (16) are arranged in rows and columns to detect a horizontal and a vertical component of the reception angle (13).

6. Detection device (4) according to Claim 5, **characterized in that**
the matrix arrangement of the receiving unit (11) has 1500 columns and 200 rows containing receiving elements (16) .

7. Detection device (4) according to any one of the preceding claims,
**characterized in that**
the transmitting unit (8) and/or the receiving unit (11) has an angle resolution of 0.1° along the horizontal direction and/or the vertical direction.

8. Detection device (4) according to any one of the preceding claims,
**characterized in that**
the detection device (4) is in the form of a laser scanner.

9. Driver assistance system (2) for a motor vehicle (1) for monitoring a surrounding area (5) of the motor vehicle (1), having at least one detection device (4) according to any one of the preceding claims.

10. Motor vehicle (1) having a driver assistance system (2) according to Claim 9.

11. Method for detecting a distance (x1) of an object (01) in a surrounding area (5) of a motor vehicle (1) from the motor vehicle (1), in which a light beam (9) is transmitted by a transmitting unit (8) and the surrounding area (5) is scanned by orienting the light beam (9) along predetermined transmission angles (10) and a portion (12) of the light beam (9) that is reflected from the object (01) is received by at least two receiving elements (16) of a receiving unit (11), the distance (x1) is detected on the basis of a period of time between transmission of the light beam (9) and reception of the reflected portion (12) of the light beam (9), and a reception angle (13) at which the reflected portion (12) of the light beam (9) from the surrounding area (5) hits the receiving unit (11) is detected,
**characterized in that** the transmission angle (10) and the reception angle (13) are approximately identical if the light beam is reflected directly from the object, and
a variance (17) between the transmission angle (10) of the light beam (9) and the reception angle (13) of the reflected portion (12) of the light beam (9) that corresponds to the transmission angle (10) is detected by the receiving unit (11), the reception angle (13) that corresponds to the transmission angle (10) being the reception angle (13) at which the reflected portion (12) of the light beam (9) from the surrounding area (5) has been received.

## Revendications

1. Dispositif de détection (4) pour un véhicule automobile (1) servant à détecter une distance (x1) d'un objet (01) dans une zone environnante (5) du véhicule automobile (1) par rapport au véhicule automobile (1), comprenant un dispositif d'émission (8), lequel est conçu pour émettre un faisceau lumineux (9) et pour balayer la zone environnante (5) par orientation du faisceau lumineux (9) le long d'angles d'émission (10) prédéterminés, et comprenant un dispositif de réception (11) comportant au moins deux éléments de réception (16), lesquels sont conçus pour recevoir une partie (12), réfléchie sur l'objet (01), du faisceau lumineux (9), pour détecter la distance (x1) à l'aide d'une durée entre l'émission du faisceau lumineux (9) et la réception de la partie réfléchie (12) du faisceau lumineux (9), et pour détecter un angle de réception (13) suivant lequel la partie réfléchie (12) du faisceau lumineux (9) est incidente sur le dispositif de réception (11) à partir de la zone environnante (5),
**caractérisé en ce que** le dispositif de détection est conçu de telle sorte que l'angle d'émission (10) et l'angle de réception (13) soient approximativement égaux lorsque le faisceau lumineux est réfléchi directement sur l'objet, et
**en ce que** le dispositif de réception (11) est conçu pour détecter un écart (17) entre l'angle d'émission (10) du faisceau lumineux (9) et l'angle de réception (13), correspondant à l'angle d'émission (10), de la partie réfléchie (12) du faisceau lumineux (9), dans lequel l'angle de réception (13) correspondant à l'angle d'émission (10) est l'angle de réception (13) suivant lequel la partie réfléchie (12) du faisceau lumineux (9) a été reçue à partir de la zone environnante (5).

2. Dispositif de détection (4) selon la revendication 1,
**caractérisé en ce que** le dispositif de réception (11) est conçu pour invalider une mesure comprenant l'émission du faisceau lumineux (9) le long d'un angle d'émission (10) déterminé et la réception de la partie réfléchie (12) du faisceau lumineux (9) émis suivant ledit angle d'émission (10), dans le cas où l'écart (17) dépasse une valeur de seuil prédéterminée de l'écart (17).

3. Dispositif de détection (4) selon l'une des revendications précédentes,
**caractérisé en ce que** le dispositif d'émission (8) comprend un élément d'émission (14) servant à émettre le faisceau lumineux (9) et un élément de déviation (15), lequel est conçu pour dévier le faisceau lumineux (9) émis par l'élément d'émission (14) le long d'une direction horizontale et/ou verticale afin de fournir les angles d'émission (10).

4. Dispositif de détection (4) selon l'une des revendications précédentes,
**caractérisé en ce qu'**un angle d'ouverture, orienté le long d'une direction horizontale, d'une zone de détection du dispositif de détection (4) est supérieur à un angle d'ouverture, orienté le long d'une direction verticale, de la zone de détection.

5. Dispositif de détection (4) selon l'une des revendications précédentes,
**caractérisé en ce que** le dispositif de réception (11) présente un agencement matriciel d'éléments de réception (16), dans lequel les éléments de réception (16) sont agencés en lignes et en colonnes pour détecter des composantes horizontale et verticale de l'angle de réception (13).

6. Dispositif de détection (4) selon la revendication 5,
**caractérisé en ce que** l'agencement matriciel du dispositif de réception (11) comprend 1500 colonnes et 200 lignes d'éléments de réception (16).

7. Dispositif de détection (4) selon l'une des revendications précédentes,
**caractérisé en ce que** le dispositif d'émission (8) et/ou le dispositif de réception (11) présentent, le long de la direction horizontale et/ou de la direction verticale, un pouvoir de résolution angulaire de 0,1°.

8. Dispositif de détection (4) selon l'une des revendications précédentes,
**caractérisé en ce que** le dispositif de détection (4) est réalisé sous la forme d'un dispositif de balayage laser.

9. Système d'aide à la conduite (2) pour un véhicule automobile (1), servant à surveiller une zone environnante (5) du véhicule automobile (1), comprenant au moins un dispositif de détection (4) selon l'une des revendications précédentes.

10. Véhicule automobile (1) comprenant un système d'assistance à la conduite (2) selon la revendication 9.

11. Procédé servant à détecter une distance (x1) d'un objet (01) dans une zone environnante (5) d'un véhicule automobile (1) par rapport au véhicule automobile (1), dans lequel un faisceau lumineux (9) est émis par un dispositif d'émission (8) et la zone environnante (5) est balayée par orientation du faisceau lumineux (9) le long d'angles d'émission (10) prédéterminés, et une partie (12), réfléchie sur l'objet (01), du faisceau lumineux (9) est reçue par au moins deux éléments de réception (16) d'un dispositif de réception (11), la distance (x1) est détectée à l'aide d'une durée entre l'émission du faisceau lumineux (9) et la réception de la partie réfléchie (12) du faisceau lumineux (9), et un angle de réception (13) suivant lequel la partie réfléchie (12) du faisceau lumineux (9) est incidente sur le dispositif de réception (11) à partir de la zone environnante (5), est détecté,
**caractérisé en ce que** l'angle d'émission (10) et l'angle de réception (13) sont approximativement égaux lorsque le faisceau lumineux est réfléchi directement sur l'objet, et
un écart (17) entre l'angle d'émission (10) du faisceau lumineux (9) et l'angle de réception (13), correspondant à l'angle d'émission (10), de la partie réfléchie (12) du faisceau lumineux (9), est détecté par le dispositif de réception (11), dans lequel l'angle de réception (13) correspondant à l'angle d'émission (10) est l'angle de réception (13) suivant lequel la partie réfléchie (12) du faisceau lumineux (9) a été reçue à partir de la zone environnante (5).
